# EUROPÄISCHE PATENTSCHRIFT

(11) **EP 3 820 734 B1**
(45) Veröffentlichungstag und Bekanntmachung des Hinweises auf die Patenterteilung: **16.11.2022**
(21) Anmeldenummer: 19734758.6
(22) Anmeldetag: 27.06.2019
(51) Int. Cl.: B60N 2/58, D04B 1/16, B29C 70/24, B29C 70/34, B29C 70/46

(54) **VERFAHREN ZUR HERSTELLUNG EINES SITZBEZUGS FÜR EINEN FAHRZEUGSITZ GEBILDET AUS EINEM FORMSTRICKTEIL**
METHOD FOR PRODUCING A SEAT COVER FOR A VEHICLE SEAT WHICH IS MADE OF A THREE DIMENSIONAL KNITTED PART
PROCÉDÉ POUR LA FABRICATION D'UNE HOUSSE POUR SIÈGE DE VÉHICULE QUI EST FABRIQUÉE D'UNE PIÈCE TRICOTÉE EN TROIS DIMENSIONS

(30) Priorität: 27.09.2018 DE 102018216535
(43) Veröffentlichungstag der Anmeldung: 19.05.2021
(73) Patentinhaber: Bayerische Motoren Werke Aktiengesellschaft, 80809 München (DE); Aunde Achter & Ebels GmbH, 41068 Mönchengladbach (DE)
(72) Erfinder: BOEHM, Heinz, 85302 Gerolsbach (DE); BUI ANH, Ngoc, 85375 Neufahrn (DE); BOLTEN, Peter, 41068 Mönchengladbach (DE); KEUBLER, Roland, 41068 Mönchengladbach (DE)
(74) Vertreter: Staeger & Sperling Partnerschaftsgesellschaft mbB
(86) Internationale Anmeldenummer: PCT/EP2019/067158
(87) Internationale Veröffentlichungsnummer: WO 2020/064157

(56) Entgegenhaltungen:
- EP-A1- 3 238 986
- WO-A1-2010/053937
- US-A1- 2012 234 051

## Beschreibung

Die Erfindung betrifft ein Verfahren zur Herstellung eines Sitzbezugs für einen Fahrzeugsitz gebildet aus einem Formstrickteil.

Im Stand der Technik werden textile Sitzbezüge aus Zuschnittteilen gefertigt. Die Herstellung des Zuschnittteils durchläuft dabei die Prozessschritte Stanzen, Nähen, Polstern. Diese Prozessschritte, insbesondere der Prozessschritt des Nähens, sind sehr kompliziert, zeit- und materialaufwändig.

Mittels Stricken der Sitzbezüge kann dieser Prozess verbessert werden. Nachteilig daran ist aber, dass gestrickte Sitzbezüge aufgrund ihrer niedrigeren Klettbeständigkeit und Scheuerbeständigkeit sehr anfällig für Belastungen sind. Ein Einbringen von Additiven in einem Waschvorgang, ähnlich wie bei Rollenware, ist bei der Stricktechnologie nicht möglich. Im Stand der Technik werden zur Formgebung bzw. Fixierung eines Netzwerkstoffs Verstärkungsfasern aus zwei Komponenten mit einem unterschiedlichen Schmelzpunkt verwendet. Die DE 197 21 370 A1 offenbart beispielsweise ein Verfahren zur Herstellung eines kontinuierlichen Netzwerkstoffes mit darin enthaltenen thermisch schmelzenden Matrixfasern zum Einsatz in Batterien. Dieses Verfahren ist aber nicht für die Herstellung eines Autositzes geeignet.

Weiterer druckschriftlicher Stand der Technik im vorliegenden technischen Gebiet ist in den Dokumenten WO 2010/053937 A1 und US 2012/234051 A1 offenbart.

Es ist daher Aufgabe der vorliegenden Erfindung, ein Verfahren zur Herstellung eines Sitzbezugs für einen Fahrzeugsitz bereit zu stellen, das den Fertigungsprozess eines geformten Sitzbezugs optimiert und gleichzeitig eine ausreichende Klettbeständigkeit des Sitzbezugs gewährleistet.

Diese Aufgabe wird durch die Merkmalskombination gemäß Patentanspruch 1 gelöst.

Erfindungsgemäß wird daher ein Verfahren zur Herstellung eines Sitzbezugs für einen Fahrzeugsitz vorgeschlagen, der aus einem Formstrickteil gebildet ist. Das Formstrickteil weist Endlosfasern und Verstärkungsfasern auf. Dabei sind die Verstärkungsfasern jeweils mit einer Kernfaser und einer die Kernfaser koaxial umhüllenden Mantelfaser ausgebildet. Das Formstrickteil wird zunächst mittels einer Strickmaschine erzeugt und anschließend wird aus dem Formstrickteil mittels einer Bügelmaschine der Sitzbezug hergestellt. Ferner weist die Bügelmaschine zumindest eine als Fahrzeugsitz geformte Unterform auf und die Kernfaser besitzt einen höheren Schmelzpunkt als die Mantelfaser. Das Verfahren umfasst die folgenden Schritte:
a. Stricken des dreidimensionalen Formstrickteils in eine Form des herzustellenden Sitzbezugs mittels der Strickmaschine aus den Endlosfasern und den Verstärkungsfasern,
b. Aufspannen des die Form des Sitzbezugs aufweisenden Formstrickteils auf die Unterform der Bügelmaschine,
c. Erhitzen des Formstrickteils mittels der Bügelmaschine zur Erzeugung des Sitzbezugs, wobei eine auf das Formstrickteil einwirkende Temperatur oberhalb des Schmelzpunktes der Mantelfaser und unterhalb des Schmelzpunktes der Kernfaser liegt.

Vorteilhaft an diesem Verfahren ist, dass das entsprechende Formstrickteil bei der Herstellung in die endgültige, dreidimensionale Form des Sitzbezugs gestrickt wird. Sitzbezügen aus Planware werden im Stand der Technik aus Flächenware, der zunächst die entsprechende Form des Sitzbezugs durch Stanzen und Nähen gegeben werden muss, hergestellt. Erfindungsgemäß entfallen diese beiden Herstellungsschritte, da die Formstrickteile mittels einer Flachstrickmaschine durch Hinzufügen und Entfernen von Maschen gefertigt werden. Es entsteht ein dreidimensionales Formstrickteil mit ausgebeulten Bereichen durch Maschenüberschuss, das der Form des entsprechenden Autositzes entspricht. Da die Scheuerbeständigkeit/Klettbeständigkeit bei gestrickten Textilien eine kritische Anforderung darstellt, werden beim Stricken mit der Flachstrickmaschine zusätzlich zu den Endlosfasern die Verstärkungsfasern in das Formstrickteil eingebracht. Dabei sind die Verstärkungsfasern gleichmäßig über das Formstrickteil verteilt. Ferner sind aber auch Konfigurationen möglich, die eine Konzentration der Verstärkungsfasern an bestimmten Positionen des Formstrickteils, beispielsweise Positionen hoher Klettanfälligkeit, aufweisen.

Vorteilhaft an der Verstärkungsfaser ist, dass die Kernfaser einen höheren Schmelzpunkt als die Mantelfaser aufweist. Dadurch schmilzt in Schritt c nur die Mantelfaser, während die Kernfaser ihre feste Struktur beibehält. Im Anschluss an Schritt c kühlen die geschmolzenen Mantelfasern wieder ab, wodurch die Endlosfasern mit den Verstärkungsfasern verkleben und fixiert werden. Auf diese Weise wird die Klettanfälligkeit der einzelnen Fasern minimiert. Da die Unterform der Bügelmaschine die Form des entsprechenden Fahrzeugsitzes aufweist und das Erhitzen auf dieser Unterform erfolgt, bewahrt das Formstrickteil nach dem Verkleben bzw. Verschmelzen der Verstärkungsfasern mit den Endlosfasern ebenfalls diese Form. Die Aufrechterhaltung dieser Form wird durch die Stabilität der Kernfaser unterstützt.

In einer vorteilhaften Ausführungsvariante ist vorgesehen, dass eine Außenfläche der Unterform, die in Schritt b und c an das Formstrickteil unmittelbar angrenzt, luft- und dampfdurchlässig ist.

Ferner ist ein Ausführungsbeispiel günstig, bei dem die Bügelmaschine eine Oberform aufweist und eine Außenfläche der Oberform, die in Schritt b und c unmittelbar an das Formstrickteil angrenzt, luft- und dampfdurchlässig ist.

In einer vorteilhaften Variante ist erfindungsgemäß vorgesehen, dass das Erhitzen in Schritt c mittels Wasserdampf erfolgt.

Vorzugsweise wird in dem Verfahren der Wasserdampf in Schritt c durch zumindest die luftdurchlässige Außenfläche der Unterform auf das Formstrickteil gefördert wird.

Aufgrund der luft- und dampfdurchlässigen Außenfläche ist die Bügelmaschine im Stande den Wasserdampf auf das Formstrickteil zu leiten. Dabei wird der Wasserdampf aus dem Inneren der Unter- bzw. der Oberform über die luft- und dampfdurchlässige Außenform auf das Formstrickteil gefördert. Infolgedessen erhitzten sich die Endlos- und Verstärkungsfasern auf die Temperatur oberhalb des Schmelzpunktes der Mantelfaser und unterhalb des Schmelzpunktes der Kernfaser.

In einen Ausführungsbeispiel des Verfahrens ist vorgesehen, dass das Formstrickteil nach Schritt b mit Nadelleisten, die die Unterform umlaufen, an der Unterform fixiert wird. Dies ist eine günstige Methode das Formstrickteil auf der Unterform zu fixieren, da Nadelleisten besonders geeignet sind, in die Unterform integriert zu werden und das Formstrickteil auf die Unterform aufzuspannen.

In einer weiteren vorteilhaften Variante ist erfindungsgemäß vorgesehen, dass in Schritt c die Verstärkungsfasern solange erhitzt werden, dass sie an Positionen, an denen sie die Endlosfasern überlagern, mit den Endlosfasern des Formstrickteils verklebt werden.

Weiter vorteilhaft ist es, wenn die Kernfaser und die Mantelfaser jeweils aus Polyester bestehen.

In einer bevorzugten Ausführungsform des Verfahrens weisen die Verstärkungsfasern eine höhere Steifigkeit auf als die Endlosfasern. Demzufolge stabilisieren die Verstärkungsfasern das Formstrickteil und ermöglichen die Aufrechterhaltung der Form des entsprechenden Fahrzeugsitzes.

In einer Variante des vorliegenden Verfahrens ist ferner vorgesehen, dass ein Schmelzpunkt der Kernfasern oberhalb von 110 °C liegt. Da diese Temperatur einen Grenzwert darstellt, der unter üblichen Betriebsbedingungen eines Fahrzeugs nicht überschritten wird, ist somit sichergestellt, dass sich das Formstrickteil im Fahrzeug nicht auf Temperaturen oberhalb dieses Grenzwertes aufheizt. Auf diese Weise ist gewährleistet, dass die Verstärkungsfasern ihre Form beibehalten und sich das Formstrickteil nicht aufgrund von Temperatureinflüssen im Fahrzeug verformt.

Andere vorteilhafte Weiterbildungen der Erfindung sind in den Unteransprüchen gekennzeichnet. Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Sitzbezugs für einen Fahrzeugsitz gebildet aus einem Formstrickteil, wobei das Formstrickteil Endlosfasern und Verstärkungsfasern aufweist und die Verstärkungsfasern jeweils mit einer Kernfaser und einer die Kernfaser koaxial umhüllenden Mantelfaser gebildet sind, wobei das Formstrickteil zunächst mittels einer Strickmaschine erzeugt und anschließend aus dem Formstrickteil mittels einer Bügelmaschine der Sitzbezug hergestellt wird, wobei die Bügelmaschine zumindest eine als Fahrzeugsitz geformte Unterform aufweist, und wobei die Kernfaser einen höheren Schmelzpunkt als die Mantelfaser aufweist, umfassend die folgenden Schritte:
a. Stricken des dreidimensionalen Formstrickteils in eine Form des herzustellenden Sitzbezugs mittels der Strickmaschine aus den Endlosfasern und den Verstärkungsfasern,
b. Aufspannen des die Form des Sitzbezugs aufweisenden Formstrickteils auf die Unterform der Bügelmaschine,
c. Erhitzen des Formstrickteils mittels der Bügelmaschine zur Erzeugung des Sitzbezugs, wobei eine auf das Formstrickteil einwirkende Temperatur oberhalb des Schmelzpunktes der Mantelfaser und unterhalb des Schmelzpunktes der Kernfaser liegt.

2. Verfahren gemäß Anspruch 1, **dadurch gekennzeichnet, dass** eine Außenfläche der Unterform, die in Schritt b und c an das Formstrickteil unmittelbar angrenzt, luft- und dampfdurchlässig ist.

3. Verfahren gemäß Anspruch 1 und 2, **dadurch gekennzeichnet, dass** die Bügelmaschine eine Oberform aufweist und eine Außenfläche der Oberform, die in Schritt b und c unmittelbar an das Formstrickteil angrenzt, luft- und dampfdurchlässig ist.

4. Verfahren gemäß Anspruch 1 bis 3, **dadurch gekennzeichnet, dass** das Erhitzen in Schritt c mittels Wasserdampf erfolgt.

5. Verfahren gemäß Anspruch 4, **dadurch gekennzeichnet, dass** der Wasserdampf in Schritt c durch zumindest die luftdurchlässige Außenfläche der Unterform auf das Formstrickteil gefördert wird.

6. Verfahren gemäß einem der vorherigen Ansprüche, **dadurch gekennzeichnet, dass** das Formstrickteil nach Schritt b mit Nadelleisten an der Unterform fixiert wird.

7. Verfahren gemäß einem der vorherigen Ansprüche, **dadurch gekennzeichnet, dass** in Schritt c die Verstärkungsfasern solange erhitzt werden, dass sie an Positionen, an denen sie die Endlosfasern überlagern, mit den Endlosfasern des Formstrickteils verklebt werden.

8. Verfahren gemäß einem der vorherigen Ansprüche, **dadurch gekennzeichnet, dass** die Kernfaser und die Mantelfaser jeweils aus Polyester bestehen.

9. Verfahren gemäß einem der vorherigen Ansprüche, **dadurch gekennzeichnet, dass** die Verstärkungsfasern eine höhere Steifigkeit aufweisen als die Endlosfasern.

10. Verfahren gemäß einem der vorherigen Ansprüche, **dadurch gekennzeichnet, dass** ein Schmelzpunkt der Kernfasern oberhalb von 110 °C liegt.

## Claims

1. A method for the production of a seat cover for a vehicle seat formed from a three dimensional knitted part, wherein the three dimensional knitted part has endless fibers and reinforcing fibers and the reinforcing fibers are each formed having a core fiber and a sheath fiber coaxially enclosing the core fiber, wherein the three dimensional knitted part is first produced by means of a knitting machine and then the seat cover is produced from the three dimensional knitted part by means of an ironing machine, wherein the ironing machine has at least one lower mold shaped as a vehicle seat, and wherein the core fiber has a higher melting point than the sheath fiber, comprising the following steps:
a. knitting the three dimensional knitted part in a shape of the seat cover to be produced by means of the knitting machine from the endless fibers and the reinforcing fibers,
b. stretching the three dimensional knitted part having the shape of the seat cover onto the lower mold of the ironing machine,
c. heating the three dimensional knitted part by means of the ironing machine to produce the seat cover, wherein a temperature applied to the three dimensional knitted part is above the melting point of the sheath fiber and below the melting point of the core fiber.

2. The method as claimed in claim 1, **characterized in that** an outer surface of the lower mold which is directly adjacent to the three dimensional knitted part in steps b and c is air and vapor permeable.

3. The method as claimed in claims 1 and 2, **characterized in that** the ironing machine has an upper mold and an outer surface of the upper mold, which is directly adjacent to the three dimensional knitted part in steps b and c, is air and vapor permeable.

4. The method as claimed in claims 1 to 3, **characterized in that** the heating in step c is carried out by means of steam.

5. The method as claimed in claim 4, **characterized in that** the steam is conveyed in step c through at least the air-permeable outer surface of the lower form onto the three dimensional knitted part.

6. The method as claimed in any one of the preceding claims, **characterized in that** the three dimensional knitted part is fixed to the lower form with needle bars after step b.

7. The method as claimed in any one of the preceding claims, **characterized in that** in step c, the reinforcing fibers are heated until they are bonded to the endless fibers of the three dimensional knitted part at positions at which they overlap the continuous fibers.

8. The method as claimed in any one of the preceding claims, **characterized in that** the core fiber and the sheath fiber each consist of polyester.

9. The method as claimed in any one of the preceding claims, **characterized in that** the reinforcing fibers have a higher rigidity than the endless fibers.

10. The method as claimed in any one of the preceding claims, **characterized in that** a melting point of the core fibers is above 110°C.

## Revendications

1. Procédé pour la fabrication d'une housse pour siège de véhicule fabriquée à partir d'une pièce tricotée, dans lequel la pièce tricotée comporte des fibres continues et des fibres de renforcement, et les fibres de renforcement sont chacune formées d'une fibre centrale et d'une fibre de revêtement enveloppant coaxialement la fibre centrale, dans lequel la pièce tricotée est d'abord produite au moyen d'une machine à tricoter, puis la housse de siège est produite à partir de la pièce tricotée au moyen d'une machine à repasser, dans lequel la machine à repasser comporte au moins un moule inférieur en forme de siège de véhicule, et dans lequel la fibre centrale a un point de fusion plus élevé que la fibre de revêtement, le procédé comprenant les étapes suivantes :
a. tricoter la pièce tricotée en trois dimensions dans une forme de housse de siège à fabriquer au moyen de la machine à tricoter à partir des fibres continues et des fibres de renforcement,
b. tendre la pièce tricotée ayant la forme de la housse de siège sur le moule inférieur de la machine à repasser,
c. chauffer la pièce tricotée au moyen de la machine à repasser pour obtenir la housse de siège, dans lequel une température agissant sur la pièce tricotée est supérieure au point de fusion de la fibre de revêtement et est inférieure au point de fusion de la fibre centrale.

2. Procédé selon la revendication 1, **caractérisé en ce qu'** une surface extérieure de la forme inférieure, qui est directement adjacente à la pièce tricotée dans les étapes b et c, est perméable à l'air et à la vapeur.

3. Procédé selon les revendications 1 et 2, **caractérisé en ce que** la machine à repasser comporte un moule supérieur et une surface extérieure du moule supérieur, qui est directement adjacente à la pièce tricotée façonnée aux étapes b et c, est perméable à l'air et à la vapeur.

4. Procédé selon les revendications 1 à 3, **caractérisé en ce que** le chauffage à l'étape c est réalisé à la vapeur d'eau.

5. Procédé selon la revendication 4, **caractérisé en ce que** la vapeur d'eau est transportée à travers au moins la surface extérieure perméable à l'air de la forme inférieure pour atteindre la pièce tricotée à l'étape c.

6. Procédé selon l'une des revendications précédentes, **caractérisé en ce que** la pièce tricotée est fixée à la forme inférieure avec des plaquettes à picots après l'étape b.

7. Procédé selon l'une quelconque des revendications précédentes, **caractérisé en ce qu'**à l'étape c les fibres de renforcement sont chauffées jusqu'à ce qu'elles soient collées aux fibres continues de la pièce tricotée aux endroits où elles recouvrent les fibres continues.

8. Procédé selon l'une des revendications précédentes, **caractérisé en ce que** la fibre centrale et la fibre de revêtement sont chacune constituées de polyester.

9. Procédé selon l'une des revendications précédentes, **caractérisé en ce que** les fibres de renforcement ont une rigidité plus élevée que les fibres continues.

10. Procédé selon l'une des revendications précédentes, **caractérisé en ce qu'**un point de fusion des fibres centrales est supérieur à 110°C.
